# EUROPEAN PATENT SPECIFICATION

(11) **EP 3 878 638 B1**
(45) Date of publication and mention of the grant of the patent: **24.04.2024**
(21) Application number: 20162240.4
(22) Date of filing: 10.03.2020
(51) Int. Cl.: B29C 65/36, B29C 65/46, B29C 65/78, B29C 65/80, B67B 6/00, B21D 51/44, B29B 11/14, B29C 49/06, B29C 49/42, B29C 51/26, B29K 67/00, B29K 705/02, B29L 31/56

(54) **CONTAINER SEALING MACHINE AND METHOD OF SEALING A CONTAINER**
VORRICHTUNG UND VERFAHREN ZUM VERSIEGELN EINES BEHÄLTERS
MACHINE ET MÉTHODE DE SCELLEMENT D'UN RÉCIPIENT

(43) Date of publication of application: 15.09.2021
(73) Proprietor: Fords Packaging Systems Limited, Bedford, Bedfordshire MK42 7SH (GB)
(72) Inventor: WHINCUP, Laura Anne, Kempston, Bedford MK42 7SH (GB); WHITLOCK, Sefton, Kempston, Bedford MK42 7SH (GB)
(74) Representative: Worthington, Richard Easton

(56) References cited:
- GB-A- 300 688
- JP-A- S51 148 589
- JP-B1- S4 924 386

## Description

### FIELD OF THE INVENTION

The present invention relates to a method and machine for sealing a foil cap onto a bottle.

### BACKGROUND OF THE INVENTION

Plastic bottles are known for containing fluids for drinking. Known bottles are formed of plastic, with a plastic cap screwed onto the bottle. Other bottles are known, which are glass bottles with foil caps.

Consequently, known bottles are costly to manufacture in terms of both materials and energy required.

JP S49 24386 B1 discloses an apparatus for sealing a mouth of a plastic container with metal foil such as aluminium foil; and JP S51 148589 A discloses a device for filling and sealing a container.

### SUMMARY OF THE INVENTION

According to a first aspect of the invention, there is provided a container sealing machine comprising: a rotary turret having a plurality of sealing heads arranged to rotate about an axis of the rotary turret, each sealing head comprising: an inductive heater arranged to inductively heat a foil closure of a container, and a sealing surface arranged to exert pressure on the closure, and a plurality of gripper assemblies arranged to rotate about the axis of the rotary turret, each gripper assembly being arranged for engaging a neck of a container. With such an arrangement, the inductive heaters may move accurately with the containers to be sealed and thus the machine may provide more accurate sealing.

Each gripper assembly may comprise two arms. This may allow the containers to be held more securely.

The arms may be biased towards each other. This may allow the arms to extend further around the neck and thereby grip the container more securely.

The arms may not comprise a metallic material. The arms may, for example, be entirely plastic or ceramic, and there may be no metal within the arms. This may allow the arms to hold the bottle at a location closer to the inductive heater, without the arms themselves being inductively heated. This in turn may allow more secure positioning of the container relative to the inductive heater and a better accuracy of sealing. It may also allow a container with a shorter neck to be sealed, thereby saving material.

Each sealing head may be aligned with a respective gripper assembly along a sealing head axis perpendicular to a respective sealing surface and may move at the same angular speed as the gripper assembly.

The machine may be arranged so that the container is supported only by the grippers during the sealing process.

Each sealing head and/or each gripper assembly may be movable along an axis perpendicular to the sealing surface. This may allow a pressure to be exerted on a closure to be sealed to the container while the closure is inductively heated.

A minimum distance between one of the inductive heaters and auxiliary aligned respective gripper assembly may be less than 3cm. This may be the closest that a gripper and a sealing head is arranged to be in arrangements where the gripper assembly and sealing head are relatively movable. This may allow more accurate and more efficient heating of the closure as the inductive heater may be closer to the foil closure.

The gripper assemblies may be arranged to engage the container neck around more than 180° of the circumference of the container neck, optionally at least 200°. This may allow more secure gripping of the container neck.

According to a second aspect of the invention, there is provided a method of sealing a container comprising: holding a container by a gripper assembly of a rotary turret, the gripper assembly having two arms, moving the container with the rotary turret, applying a closure to the container, and inductively heating the closure with a sealing head, the sealing head moving with the container.. Such a method may provide more accurate sealing of a closure onto a container.

The method may further comprise pressing the sealing head onto the closure. This may improve the strength of the seal formed.

The method of the second aspect may be carried out by the machine of the first aspect.

### BRIEF DESCRIPTION OF THE DRAWINGS

Various aspects of the invention will now be described, by way of example only, with reference to the accompanying drawings, in which:
Figure 1 shows a schematic plan view of a sealing system;
Figure 2 shows a schematic view of a plurality of sealing heads and gripper assemblies;
Figure 3 shows a schematic drawing of a sealing head and gripper assembly;
Figure 4a shows a gripper assembly;
Figure 4b shows a gripper assembly holding a bottle;
Figure 5 shows a prior art machine for forming a closure;
Figure 6 shows a machine for forming a closure;
Figure 7 shows a cross-section of a machine for forming a closure;
Figure 8 shows a system for forming a closure;
Figure 9a shows a schematic plan view of a closure;
Figure 9b shows a schematic isometric view of a closure;
Figure 9c shows a dimensioned cross-section of a closure;
Figure 10 shows a dimensioned cross-section of a neck of a container;
Figure 11 shows a cross-section of a preform for forming a container;
Figure 12 shows a container;
Figure 13 shows a sealed container;
Figure 14 shows a cross-section of the neck of a sealed container; and;
Figure 15 shows a cross-section of a neck of a prior-art sealed container.

### DETAILED DESCRIPTION OF EMBODIMENT(S)

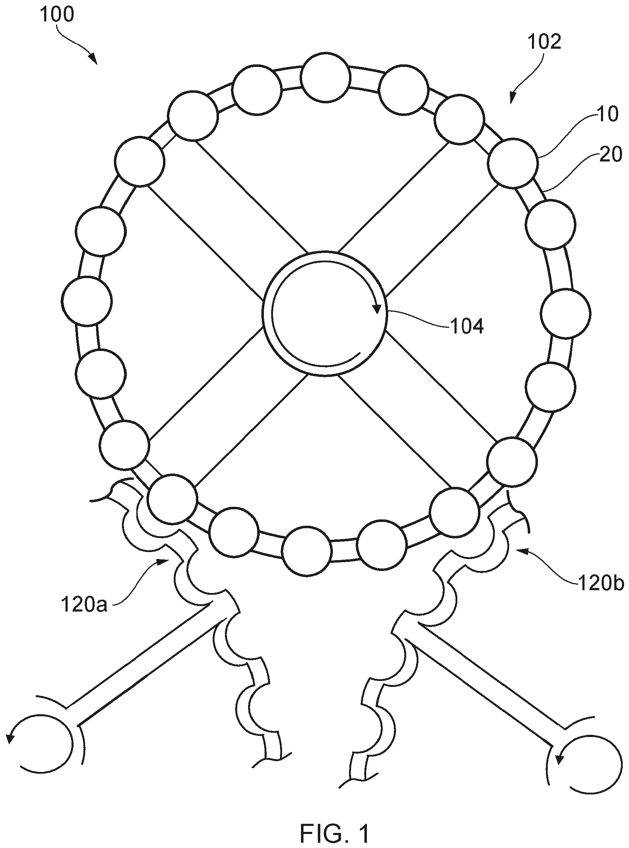

The present disclosure relates to a plastic bottle for holding drinking water or any other liquid having a lower material and energy requirement for manufacture and a good resistance to bursting due to potentially high internal pressures (e.g. those which are encountered during squeezing of a flexible container). This may be achieved by providing a closure, in the form of a foil cap, with an appropriate shape and a plastic bottle having a rim having an appropriate shape, each may be used separately and with different configurations of bottles and caps respectively and the cap and bottle combination may be further improved by using a particular sealing machine and sealing method, which may be more energetically efficient and may provide an improved sealing. The manufacture of the foil cap, due to the dimensions of the cap, may be achieved via the use of a new machine and a new method for manufacturing the cap. Figure 1 shows a plan view of a sealing system 100, in which a rotary sealing turret 102 may be fed by a first star wheel 120a, which may carry filled, unsealed containers and sealed containers may be removed from the rotary sealing turret 102, which may also be referred to as a star-wheel, via a third star wheel 102b.

The unsealed containers may have closures placed on their openings while on the first star wheel 120a, and the placed, unsealed closures may be held in place by a sideskirt of the closure, which may surround a rim of the container. The system 100 may therefore further comprise a cap applier. The cap applier may be fed from a machine for forming closures, which is described later.

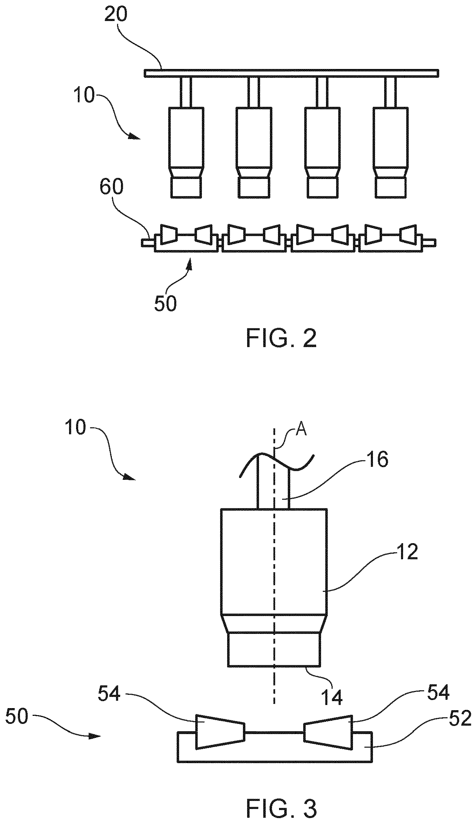

As can be seen, the rotary sealing turret 102, may comprise sealing heads 10 arranged on a circular rail 20, which may be coupled to and driven by a central driving wheel or a motor 104. Alternatively, the sealing turret 102 may be a ring arranged on bearings, and may be driven by an eccentric wheel arranged to drive an inner surface of the ring. Figure 2 shows how the sealing heads 10 may be arranged on a rotary star wheel 20, for example on a circular rail 20 arranged to rotate about a central wheel 104. A plurality of gripper assemblies 50, of which there may be the same number as there are sealing heads, may be arranged to rotate at the same speed on a similar rail 60, arranged to rotate about the same central axis as the rail 20 is arranged to rotate about. Each sealing head 10 may therefore be vertically aligned with a respective gripper assembly 50 and arranged to move at the same speed as the respective gripper assembly 50.

Figure 3 shows a sealing head 10 which comprises an inductive heater 12, which may be formed of an electric coil arranged to generate an electric field that will generate eddy currents within a nearby metallic object such as foil closure. The sealing head 10 also comprises a sealing surface 14, which may be formed of rubber, and may be arranged to press on a foil closure in order to exert a sealing pressure. The sealing surface 14 may be deformable in order to adhere the foil closure to the container evenly.

The sealing head 10 may be coupled to an actuator 16, which may be a fluid actuated cylinder, such as a hydraulic or pneumatic cylinder, or may comprise an elastic member such as a spring and the actuator 16 may be arranged to move the sealing head 10 along an axis A, which is substantially perpendicular to the sealing surface 14. The sealing head 10, the actuator 16 and the gripper assembly 50 may be arranged so that, at a lower end of the range of movement of the sealing head 10, the inductive heater 12 of the sealing head 10 is less than 3 centimeters from the grippers 50. At an upper end of the range of movement of the sealing head 10, the sealing surface 14 may be sufficiently far from the grippers 50 that it is disengaged from and does not contact a container and/or a closure held by the grippers 50.

The sealing head 10 may be controlled by a control system, which may activate the inductive heater 12 for a predetermined time and may move the actuator 16 such that the sealing surface 14 engages a closure for a predetermined time. The inductive heater 12 may be activated while the sealing surface 14 is engaged with a closure and may be deactivated while the sealing surface 14 is engaged with a closure, the sealing surface 14 continuing to exert a force on the closure after the inductive heater 12 has stopped heating the closure.

The actuator 16 may be configured to exert a force of between 30 Newtons and 200 Newtons on the closure, in order to deform the sealing surface 14 an appropriate amount and therefore provide an appropriately-sized adhesive footprint fixing a closure to a container.

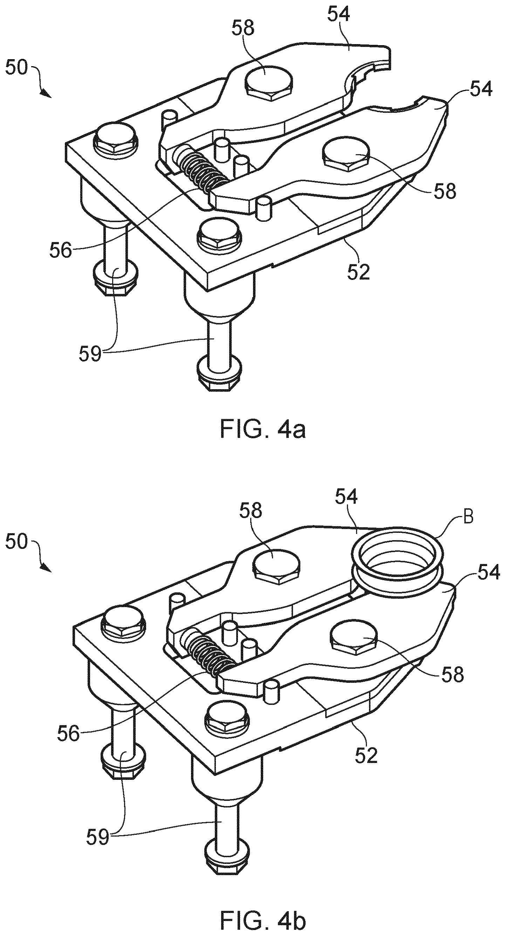

Figure 4a shows a gripper assembly 50 having a base 52 and two arms 54 coupled to the base. It will be understood that the gripper assembly 50 may have more than two arms 52 and that the arms 50 of the shown embodiment are movable in a common plane but the arms 50 may be arranged to move in different planes. The arms 54 may be pivotally connected to the base 52 via bolts 58 so that each arm 52 is pivotable about a respective arm axis through a respective bolt 58. The arms 52 may be coupled by an elastic member 56, which may push two ends of the arms 54 apart, thereby biasing the opposite ends of the arms 54, arranged to receive a bottle B, together. Alternative biasing means may be used, such as electric motors, hydraulic cylinders or pneumatic cylinders. The biasing means may exert a torque on the arms 54 or may directly bias the arms 54 together.

The gripper assembly 50 may be coupled to the circular rail 60 via bolts 59 and may thereby be removably coupled. Different coupling means may also be used and the gripper assemblies 50 may be formed intrinsicly with the sealing turret 102.

Figure 4b shows how the neck of a bottle B may be received within the gripper arms 54 and how the gripper arms may extend around the neck of the bottle B. A contact area between the bottle B and the arms 54 may extend around greater than 180°, optionally greater than 200°, of the circumference of the neck of the bottle B. As a bottle B is pushed horizontally into the gripper arms, it may compress the spring 56 and thereby open the gripper arms 54, and the gripper arms 54 may close around the neck of the bottle B once the bottle B has moved into an appropriate position between the gripper arms 54. In order to faciliate easy entry into the arms 54 for the bottle B, the arms 54 may have an outwardly-diverging portion arranged to receive the bottle B.

The gripper arms 54 may be formed entirely of a plastic or ceramic material and may not comprise any metal so that the inductive heater 12 cannot act to heat the gripper arms 54 despite their proximity to the inductive heater 12.

The gripper arms 54 may be arranged to engage an under-side of a radial flange extending from a bottle neck. By engaging a radial flange, the gripper arms 54 alone may support the bottle. Therefore, the gripper arms 54 may have a planar surface on their upper side. The gripper arms 54 may engage the bottle neck between two flanges, which may provide support against the bottle B swinging while being held by the gripper arms 54.

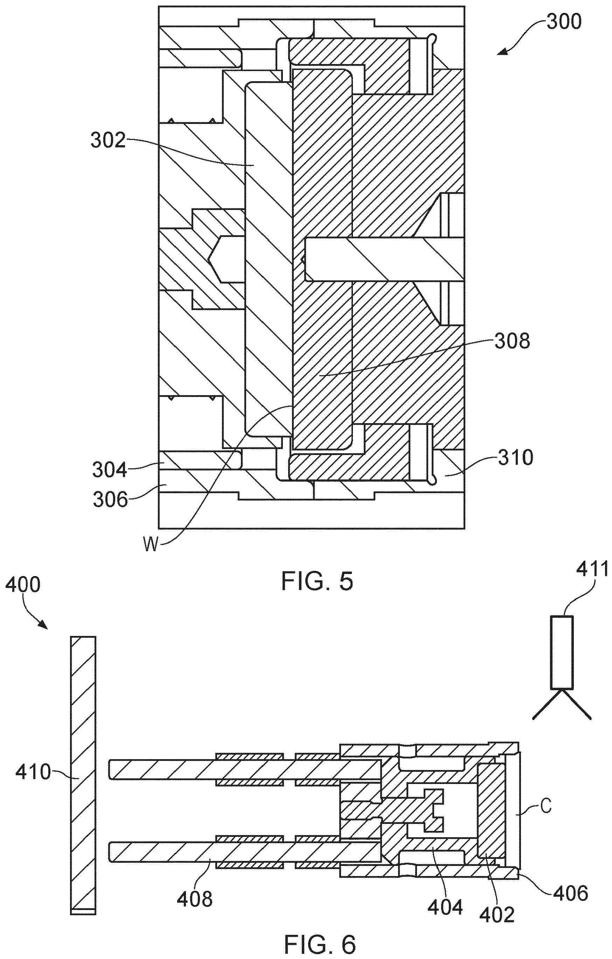

Figure 5 shows a prior art machine 300 for forming a closure. The closure may be formed by being pressed between a centre punch 302 and a centre counter-punch 308 and between a rim punch 306 and a rim counter punch 310. This may form a closure having a centre recess and a side skirt. For disengaging the formed closure from the centre punch 302 and the rim punch 306, there is provided an ejection ring 304 which may move relative to the centre punch 302 and rim punch 306. However, the requirement to use an ejection ring 304 limits how the closure may be shaped. In particular, the width of a central recess in the closure may be limited by the space required by an ejection ring 304.

Therefore, alongside the realisation of the present inventors that a wider recess may improve the strength of a closure, the present inventors realised that such a closure may not be formed optimally by such a prior art machine.

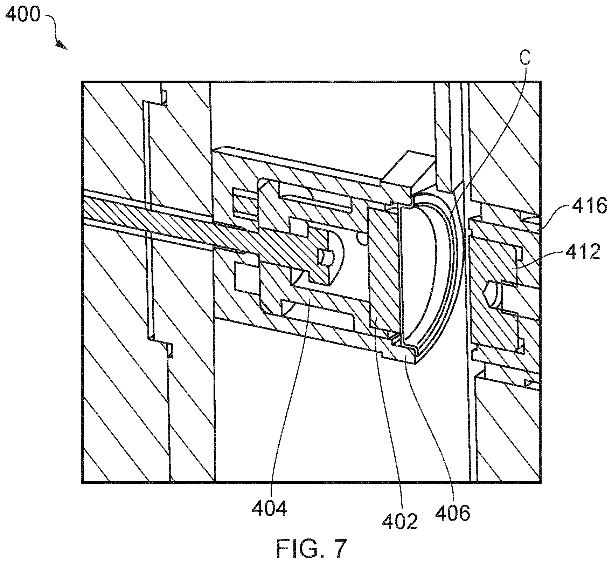

Figure 6 shows a cross-section of a machine 400, and a closure C formed therein. In this machine, there is a centre punch 402 and a rim punch 406, which are arranged to cooperate with a centre counterpunch 412 and a rim counterpunch 416, shown in Figure 7. The machine 400 also comprises an ejection pin 408, which is arranged to abut an ejection press 404 which in turn engages the centre punch 402, so that as the centre punch 402 and rim punch 406 retract, the retraction of the centre punch 402 is limited, resulting in relative movement between the rim punch 406 and the centre punch 402, and the closure C will thereby disengage from the rim punch 406. The force applied to the ejection pin 408 is provided by an ejection plate 410, which may be stationary, and which may be positioned appropriately to disengage the closure C from the rim punch 406 by an appropriate distance. As shown in Figure 6, more than one ejection pin 408 may be used, so that the center punch 402 may not tilt.

In an alternative embodiment, the ejection plate 410 may be omitted and the ejection pin 408 may be fixed in position by a bolt or other fastening member, or by an electromagnet.

The machine 400 may comprise further punches and counter-punches in order to form closures having more intricate shapes. For example, the centre punch 402 may be annular, with other punches arranged radially inside. The punches may also be nonplanar, as opposed to being planar, so as to create corrugated closures.

There may also be one or more punches and counter-punches between the rim punch 406 and the centre punch 402, those punches and counter-punches being arranged to form the closure.

A fluid jet 411, such as a gas jet, is provided for producing a jet pulse of air, or other gas for injection into a workspace of the machine 400. The gas may experience drag after its interaction with the portion of the closure C disengaged from the rim punch 406 and this drag force may peel the closure C off the centre punch 402 and the fluid jet 411 may thereby expel the closure C from the machine 400.

Alternatively, the closure C may be removed from the workspace via gravity and/or disengaged from the centre punch by a vibration of the centre punch.

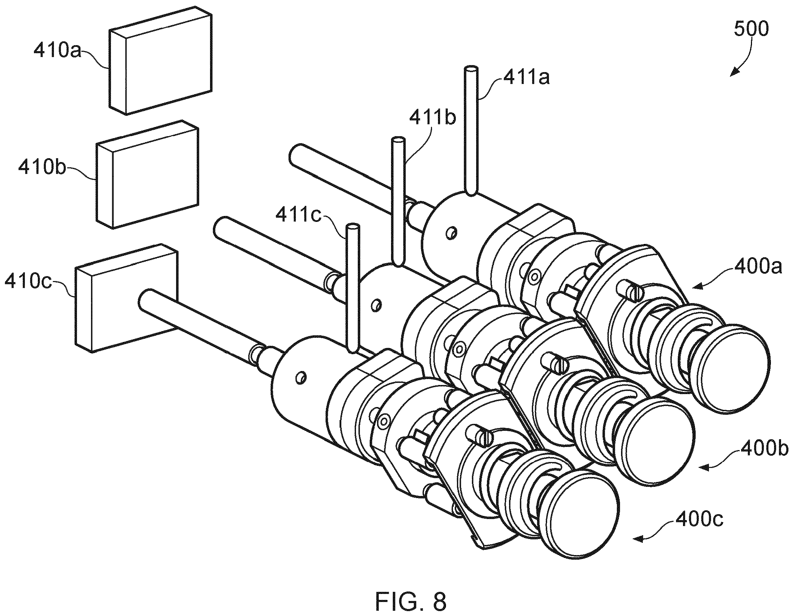

Figure 8 shows a system 500 comprising a plurality of machines 400a, 400b, 400c, each machine having a respective fluid jet 411a, 411b, 411c and each machine 400a, 400b, 400c, each machine having a respective ejection plate 410a, 410b, 410c. The ejection plates are staggered such that as each tool moves backwards, the ejector pins will touch the plate at different times, disengaging the respective closures from the tools at different times, and thereby allowing the closures formed to be ejected one after the other.

Each cap may be sterilised and/or disinfected after formation, such as by exposure to ultraviolet rays. Each cap may pass through an ultraviolet sterilisation and/or disinfection machine before being applied to a container.

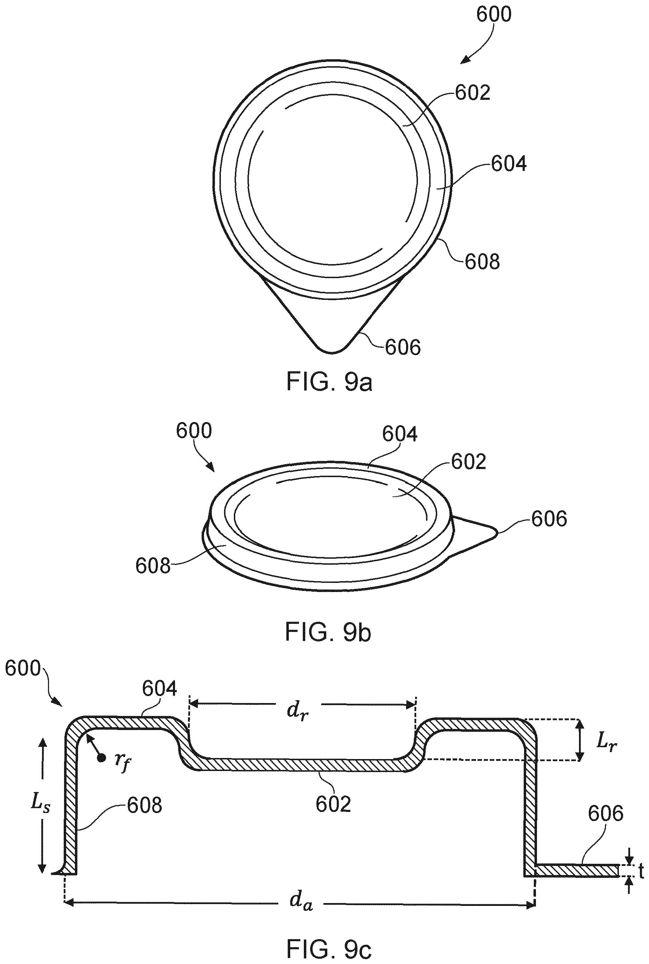

Figure 9a shows a plan view of a closure 600. The closure 600 may be a metallic cap formed of steel or aluminium and may comprise a plastic layer. The closure 600 comprises a top surface formed of a recess 602 and an annulus 604 surrounding the recess 602. The recess 602 and annulus 604 may each be planar and the annulus 604 may lie in a first plane, which is spaced from and parallel to a second plane, in which the recess 602 lies. Together, the recess 602 and annulus 604 form a top surface of the closure 600.

Extending downwardly from the top surface of the closure 600, i.e. extending downwardly from an outer diameter of the annulus 604 is a sidewall or skirt 608. It will be understood that the sidewall 608 may be substantially perpendicular to the top surface, or may have a frustoconical shape, so that the sidewall defines at a bottom edge, opposite the top surface, an opening having a diameter greater than or equal to the diameter of the annulus 604.

Figure 9c shows a cross-section of the closure 600, with relevant dimensions drawn thereon. While the closure is shown as having a significant thickness, it will be understood that the thickness of the material t may be small, such that the dimensions of the cap may be considered the same independently of whether the thickness of the material is accounted for. The thickness of the closure t may be less than 0.05mm.

The depth of the recess, which may be measured from a top surface of the recess 602 to a top surface of the annulus 604 and may be designated Lᵣ, and may be 1mm or less, preferably 0.2mm or less.

The recess 602 may have a diameter dᵣ, which may be 21mm or more, and the annulus may have an outer diameter dₐ which may be 28 mm or less, optionally as small as 23.2mm or less. The diameter of the annulus may be measured to an outer diameter of the top of the side wall 608, at which the sidewall becomes filleted. The annulus thickness may be defined as dₐ minus dᵣ and may be 8.3mm or less.

The sidewall 608 may be connected to the annulus 604 via a fillet having a radius r_{f}, which may be 0.1mm or more, preferably 0.4mm or more. At an end of the sidewall 608, opposite the annulus 604, the closure 600 may have a pull tab 606, which may take the form of a flange extending radially outwardly from the bottom end of the sidewall 608. The pull tab 606 may be flattened to a container when the closure 600 is sealed onto a container.

The closure 600 may further comprise a third portion, which may be radially inside the recess 602, and may lie in the first plane or in a third plane spaced from the first and second planes. In an example, the recess 602 may be annular and may take the form of an annular trench.

Although the annulus 604 and recess 602 may lie in two respective planes, it is not necessary that the annulus 604 and recess 602 are flat. The annulus 604 and recess 602 may be corrugated or may have relatively flat concave or convex shapes.

The closure 600 is shown here as being substantially circular, but it is not necessary that the closure 600 is circular. The closure 600 may have straight sides and corners or may be ovoid.

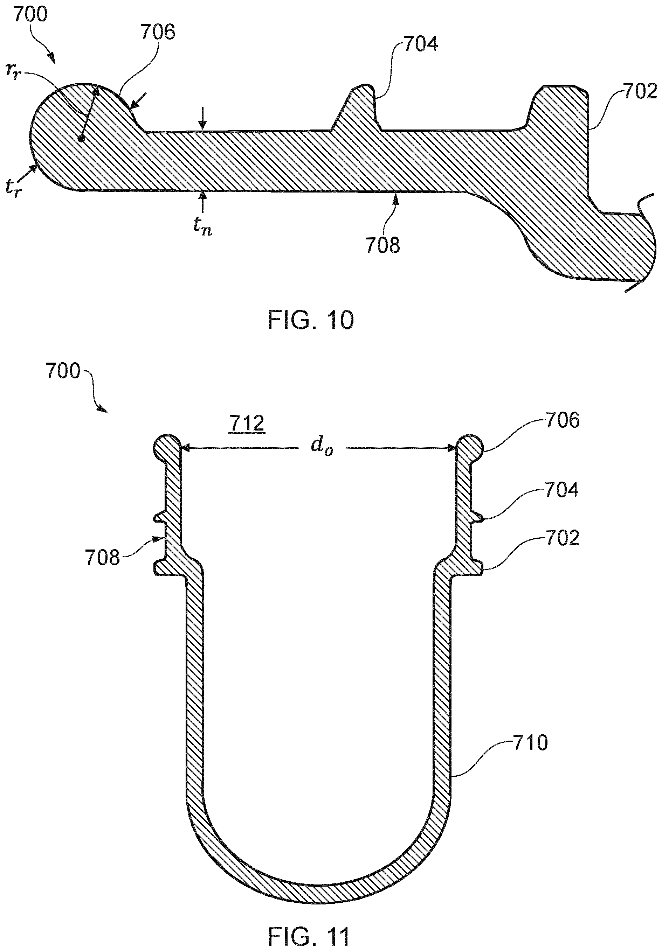

Figure 10 shows a cross-section of a neck 708 of a preform 700. Notably, the neck 808 of a container 800 may be identical to a neck 708 of a preform 700 from which the container 800 is formed.

The preform 700 has a neck 708, comprising a rim 706 and at least one support flange 702, optionally two support flanges 702, 704. The rim 706 may have a substantially toroidal or "doughnut" shape, and the toroid may have a radius rᵣ, the radius rᵣ being a radius of a perimeter of a cross-section of the toroid, the cross-section taken in a plane perpendicular to an opening 712. The toroid may have a thickness tᵣ, which may be twice the radius rᵣ in the case that the toroid has a circular cross-section. While the toroid is shown as having a circular cross-section, it will be understood that it may have an elliptical, semi-circular or ovoid cross-section. A radially inner side of the toroid, defining an opening 712 of the preform 700, may have a substantially flat surface and may not be involved in the sealing of the container 800. The radius rᵣ of the toroid may be 1mm, or may be greater than 1mm. The thickness tᵣ of the rim 706 may be 2mm or greater. The thickness tᵣ of the rim may be greater than a thickness of the neck tₙ, the thickness tₙ being measured at a portion of the neck 708 extending from the toroid 706, where the radially inner and radially outer surfaces of the neck 708 are substantially parallel. The thickness of the neck may be 1.1mm.

Each radial support flange 702, 704 may have a flat surface, which may be annular, and may extend radially outward from the neck 708. The radial flanges 702, 704 may extend outwardly 1mm from the neck 708. The radial flanges 702, 704 may be engaged by arms of a gripper during a filling of sealing of the container.

A complete preform cross section is shown in figure 11. The preform 700 may further comprise a preform body 710. The preform body 710 may have a diameter less than a diameter of an opening of the preform, the diameter of the opening of the preform dₒ being defined by an inner surface of the rim 706. The preform body 710 may be substantially test-tube-shaped, and so may be substantially cylindrical with a domed bottom.

The preform 700 may be formed by injection moulding. A prefrom-shaped mould may be used and may contain a blowing stick. Molten plastic (such as PET) may then be injected into the mould so that the blowing stick is inside the preform and the plastic may harden to the shape of the mould.

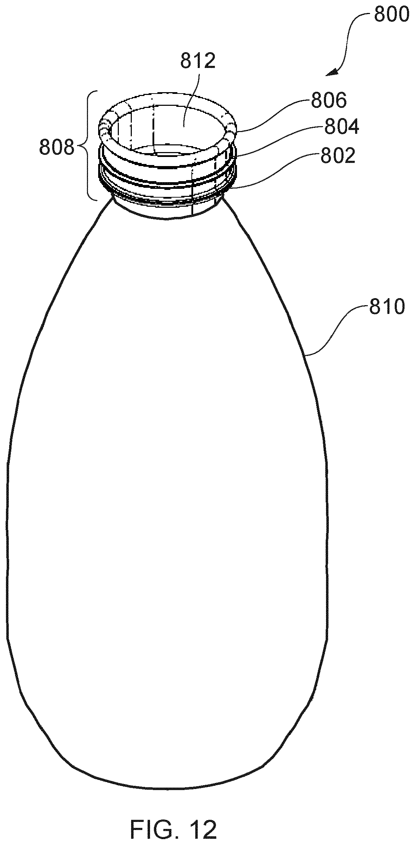

The preform body 710 may be blow-mouldable, i.e. may be heated and may have air injected into it (e.g. via a blowing stick) so as to deform the preform body 710 in order to form a container body 810. By this method, a container 800 as shown in figure 12, having a container rim 806 and two container support flanges 802, 804 may be formed. The container body 810 may be transparent and water tight.

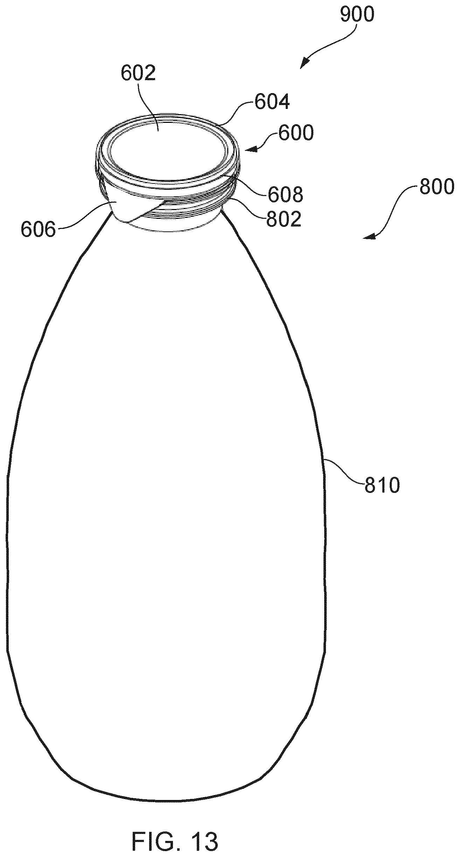

After sealing by a sealing machine, such as the machine 100 shown in Figure 1, a sealed container 900 as shown in figure 13 may be formed. The sealed container 900 may comprise a closure 600, adhered to a container 800. The sealed container 900 may be formed so that the closure 600 is deformed so that the closure 600 is shaped and adhered to the rim 806.

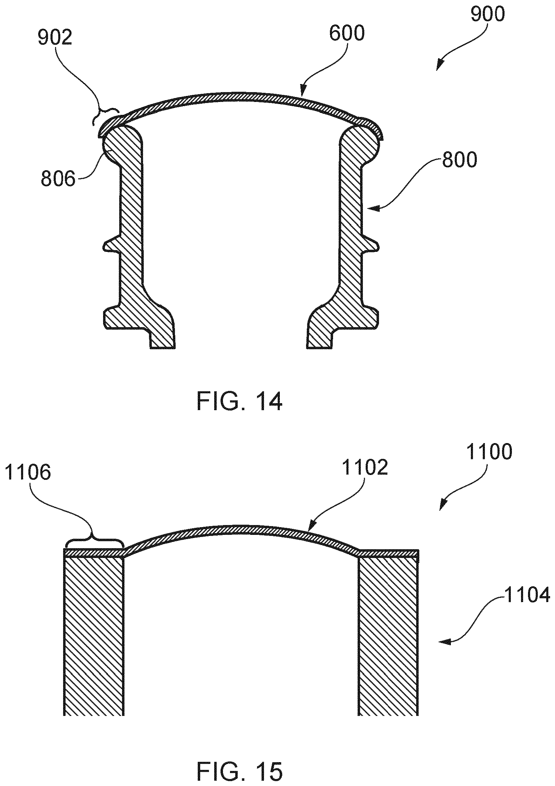

Figure 14 shows a schematic cross-section of a sealed container 900. In this cross-section, the closure 600 has an outwardly convex, domed shape and is adhered to the container 800 at an adhesive footprint 902. As shown in figure 14, the closure 600 meets the container 800 at a radially inner point of the adhesive footprint 902 where the container 600 is substantially tangential to the rim 806 of the container 800.

Since the thin material of the closure 600 will transmit substantially only tensile forces, the adhesive by which the closure 600 is adhered to the container 800 will suffer only shear forces, since the tensile forces within the closure will be aligned with the closure 600, which is tangential to the rim 806. Thereby, a high burst pressure may be obtained. The sealed container 900 may be opened by exerting a tensile force on the adhesive, using the pull tab 606 to pull the closure 600 away from the container 800.

Figure 15 shows, for comparison, a prior art sealed container 1100. As shown in Figure 15, a rim of a prior art sealed container 1104 has a substantially square cross-section and therefore a closure 1102, which has a domed outward shape due to an internal pressure of the container 1100, meets the container 1104 at an angle. The closure 1102 is adhered to the container 1104 at an adhesive footprint 1106. As the closure 1102 will have a tensile stress, which is not tangential to the rim of the container 1104, there will be a tensile force exerted on the adhesive connecting the closure 1102 to the container 1104 and therefore a failure of the adhesive is likely at a low internal pressure of the sealed container 1100.

Although the invention has been described above with reference to one or more preferred embodiments, it will be appreciated that various changes or modifications may be made without departing from the scope of the invention as defined in the appended claims.

## Claims

1. A container sealing machine comprising:
a rotary turret (102) having a plurality of sealing heads (10) arranged to rotate about an axis of the rotary turret, each sealing head comprising:
an inductive heater (12) arranged to inductively heat a foil closure of a container, and
a sealing surface (14) arranged to exert pressure on the closure, and
a plurality of gripper assemblies (50) arranged to rotate about the axis of the rotary turret, each gripper assembly being arranged for engaging a neck of a container.

2. The machine of claim 1, wherein each gripper assembly comprises two arms (54), optionally,
wherein the arms are biased toward each other.

3. The machine of any one of claims 2, wherein the arms do not comprise a metallic material.

4. The machine of any one of claims 1 to 3, wherein each sealing head is aligned with a respective gripper assembly along a sealing head axis perpendicular to a respective sealing surface and moves at the same angular speed as the gripper assembly.

5. The machine of any preceding claim, wherein the machine is arranged so that the container is supported only by the grippers during the sealing process.

6. The machine of any preceding claim, wherein each sealing head and/or each gripper assembly is movable along an axis perpendicular to the sealing surface.

7. The machine of any preceding claim, wherein a minimum distance between one of the inductive heaters and an axially aligned respective gripper assembly is less than 3cm.

8. The machine of any preceding claim, wherein the gripper assemblies are arranged to engage the container neck around more than 180° of the circumference of the container neck, optionally at least 200°.

9. A method of sealing a container comprising:
holding a container by a gripper assembly (50) of a rotary turret, the gripper assembly having two arms (54),
moving the container with the rotary turret,
applying a closure to the container, and
inductively heating the closure with a sealing head (10), the sealing head moving with the container.

10. The method of claim 9, further comprising pressing the sealing head onto the closure.

11. The method of claim 9 or 10, wherein the method is carried out by the machine of any one of claims 1 to 8.

## Patentansprüche

1. Behälterversiegelungsmaschine, umfassend:
einen Drehrevolver (102) mit einer Vielzahl von Versiegelungsköpfen (10), die so angeordnet sind, dass sie sich um eine Achse des Drehrevolvers drehen, wobei jeder Versiegelungskopf umfasst:
eine induktive Heizvorrichtung (12), angeordnet, um einen Folienverschluss eines Behälters induktiv zu erwärmen, und
eine Versiegelungsoberfläche (14), angeordnet, um Druck auf den Verschluss auszuüben, und
eine Vielzahl von Greiferanordnungen (50), angeordnet, sich um die Achse des Drehrevolvers zu drehen, wobei jede Greiferanordnung zum Eingreifen in einen Hals eines Behälters angeordnet ist.

2. Maschine nach Anspruch 1, wobei jede Greiferanordnung zwei Arme (54) umfasst, optional,
wobei die Arme zueinander hin vorgespannt sind.

3. Maschine nach einem der Ansprüche 2, wobei die Arme kein metallisches Material umfassen.

4. Maschine nach einem der Ansprüche 1 bis 3, wobei jeder Versiegelungskopf entlang einer Versiegelungskopfachse senkrecht zu einer entsprechenden Versiegelungsoberfläche auf eine entsprechende Greiferanordnung ausgerichtet ist und sich mit derselben Winkelgeschwindigkeit wie die Greiferanordnung bewegt.

5. Maschine nach einem der vorhergehenden Ansprüche, wobei die Maschine so angeordnet ist, dass der Behälter während des Versiegelungsprozesses nur von den Greifern getragen wird.

6. Maschine nach einem der vorhergehenden Ansprüche, wobei jeder Versiegelungskopf und/oder jede Greiferanordnung entlang einer Achse senkrecht zur Versiegelungsoberfläche bewegbar sind.

7. Maschine nach einem der vorhergehenden Ansprüche, wobei ein Mindestabstand zwischen einer der induktiven Heizvorrichtungen und einer axial ausgerichteten entsprechenden Greiferanordnung kleiner als 3 cm ist.

8. Maschine nach einem der vorhergehenden Ansprüche, wobei die Greiferanordnungen so angeordnet sind, dass sie um den Behälterhals herum um mehr als 180° des Umfangs des Behälterhalses, optional mindestens 200°, in Eingriff gelangen.

9. Verfahren zum Versiegeln eines Behälters, umfassend:
Halten eines Behälters durch eine Greiferanordnung (50) eines Drehrevolvers, wobei die Greiferanordnung zwei Arme (54) aufweist,
Bewegen des Behälters mit dem Drehrevolver,
Anbringen eines Verschlusses an dem Behälter, und
induktives Erwärmen des Verschlusses mit einem Versiegelungskopf (10), wobei sich der Versiegelungskopf mit dem Behälter bewegt.

10. Verfahren nach Anspruch 9, ferner umfassend das Drücken des Versiegelungskopfes auf den Verschluss.

11. Verfahren nach Anspruch 9 oder 10, wobei das Verfahren durch die Maschine nach einem der Ansprüche 1 bis 8 ausgeführt wird.

## Revendications

1. Machine de scellement de récipient comprenant :
- une tourelle rotative (102) ayant un ensemble de têtes de scellement (10) disposées pour tourner autour d'un axe de la tourelle rotative, chaque tête de scellement ayant :
* un dispositif de chauffage par induction (12) pour chauffer par induction un film d'obturation du récipient, et
* une surface de scellement (14) pour exercer une pression sur la fermeture, et
- plusieurs ensembles de pince (50) pour tourner autour de l'axe de la tourelle rotative, chaque ensemble de pince étant disposé pour coopérer avec un col de récipient.

2. Machine selon la revendication 1,
dans laquelle
chaque ensemble de pince comprend deux bras (54) et en option,
les bras sont inclinés l'un vers l'autre.

3. Machine selon la revendication 2,
dans laquelle
les bras ne comportent pas de métal.

4. Machine selon l'une quelconque des revendications 1 à 3,
dans laquelle
chaque tête de scellement est alignée sur un ensemble de pince respectif suivant l'axe de la tête de scellement perpendiculaire à la surface de scellement respective et il se déplace à la même vitesse angulaire que l'ensemble de pince.

5. Machine selon l'une quelconque des revendications précédentes,
dans laquelle
la machine est organisée pour que le conteneur soit porté seulement par les pinces pendant l'opération de scellement.

6. Machine selon l'une quelconque des revendications précédentes,
dans laquelle
chaque tête de scellement et/ou chaque ensemble de pince est mobile selon un axe perpendiculaire à la surface de scellement.

7. Machine selon l'une quelconque des revendications précédentes,
dans laquelle
une distance minimale est prévue entre l'un des dispositifs de chauffage par induction et un ensemble de pince respectivement alignées suivant l'axe, cette distance étant inférieure à 3 cm.

8. Machine selon l'une quelconque des revendications précédentes,
dans laquelle
les ensembles de pince sont organisés pour prendre le col du récipient sur plus de 180° de la périphérie du col de récipient et en option sur au moins 200°.

9. Procédé de scellement d'un récipient consistant à :
- tenir un récipient avec un ensemble de pince (50) d'une tourelle rotative, l'ensemble de pince ayant deux bras (54),
- déplacer le récipient par rapport à la tourelle rotative,
- appliquer un élément de fermeture sur le récipient, et
- chauffer par induction l'élément de fermeture avec une tête de scellement (10), cette tête se déplaçant avec le récipient.

10. Procédé selon la revendication 9,
consistant en outre à presser la tête de scellement sur l'élément de fermeture.

11. Procédé selon la revendication 9 ou 10,
selon lequel
le procédé est appliqué par une machine selon l'une quelconque des revendications 1 à 8.
